# FASCICULE DE BREVET EUROPEEN

(11) **EP 4 593 006 B1**
(45) Date de publication et mention de la délivrance du brevet: **19.08.2026**
(21) Numéro de dépôt: 25153640.5
(22) Date de dépôt: 23.01.2025
(51) Int. Cl.: G10K 11/172, B64D 33/04, B32B 3/12, F02C 7/24, F02K 1/82, F01N 1/02, B64C 1/40

(54) **STRUCTURE D'ABSORPTION ACOUSTIQUE COMPORTANT AU MOINS UN TUBE DE PARTITION POUR FORMER DEUX TYPES DE RÉSONATEURS, PROCÉDÉ DE FABRICATION D'UNE TELLE STRUCTURE**
SCHALLABSORBIERENDE STRUKTUR MIT MINDESTENS EINEM TEILERROHR ZUR BILDUNG VON ZWEI ARTEN VON RESONATOREN, VERFAHREN ZUR HERSTELLUNG EINER SOLCHEN STRUKTUR
ACOUSTIC ABSORPTION STRUCTURE COMPRISING AT LEAST ONE PARTITION TUBE FOR FORMING TWO TYPES OF RESONATORS, METHOD FOR MANUFACTURING SUCH A STRUCTURE

(30) Priorité: 24.01.2024 FR 2400681
(43) Date de publication de la demande: 30.07.2025
(73) Titulaire: AIRBUS OPERATIONS (S.A.S.), 31060 Toulouse (FR)
(72) Inventeur: BOURHIS, Arnaud, 31060 TOULOUSE Cedex 9 (FR); SENTIER, Julien, 31060 TOULOUSE Cedex 9 (FR); PRZYBYLA, Benoit, 31060 TOULOUSE Cedex 9 (FR)
(74) Mandataire: Airbus-OPS SAS

(56) Documents cités:
- WO-A1-2020/053514
- CN-A- 115 602 142
- FR-A1- 3 120 732
- US-A1- 2017 053 635

## Description

La présente demande se rapporte à une structure d'absorption acoustique comportant au moins un tube de partition pour former deux types de résonateurs ainsi qu'à un procédé de fabrication d'une telle structure.

Selon un mode de réalisation de l'art antérieur, un ensemble de propulsion d'aéronef comprend une nacelle ainsi qu'une turbomachine double flux, positionnée à l'intérieur de la nacelle, qui présente, à l'arrière, un conduit d'éjection primaire par lequel sont évacués les gaz brûlés issus de la combustion. Ce conduit d'éjection primaire comprend, au niveau de sa peau, une structure d'absorption acoustique pour atténuer le bruit sur plusieurs bandes de fréquences, comme par exemple les bruits liés à la combustion (300-1000Hz) et les bruits liés au fonctionnement de la turbine (supérieurs ou égaux à 4000Hz).

Selon un premier mode de réalisation, une structure d'absorption acoustique comprend au moins une structure alvéolaire positionnée entre une couche acoustiquement résistive en contact avec un milieu dans lequel se propagent des ondes acoustiques et une couche réflectrice. Ce mode de réalisation permet d'obtenir un résonateur % d'onde adapté pour atténuer des ondes sonores avec des fréquences élevées. Selon ce mode de réalisation, la plage de fréquences des ondes sonores atténuées dépend de la hauteur des cellules de la structure alvéolaire.

Selon un deuxième mode de réalisation visible sur la figure 1 et décrit dans le document FR094668, une structure d'absorption acoustique 10 comprend des première et deuxième structures alvéolaires 12, 14 positionnées entre une couche acoustiquement résistive 16 en contact avec un milieu dans lequel se propagent des ondes acoustiques et une couche réflectrice 18. Cette structure d'absorption acoustique 10 comprend une couche de séparation 20 intercalée entre les première et deuxième structures alvéolaires 12, 14, la première structure alvéolaire 12 étant intercalée entre la couche acoustiquement résistive 16 et la couche de séparation 20, la deuxième structure alvéolaire 14 étant intercalée entre la couche réflectrice 18 et la couche de séparation 20.

Selon ce deuxième mode de réalisation, la couche de séparation 20 comprend des orifices 22 permettant de faire communiquer les cellules de la première structure alvéolaire 12 avec celles de la deuxième structure alvéolaire 14, chaque orifice 22 étant prolongé par un tube 24 positionné dans la deuxième structure alvéolaire 14.

La structure d'absorption acoustique 10 permet d'obtenir deux types de résonateurs, un premier résonateur de type Helmholtz au niveau des cellules de la première structure alvéolaire 12, adapté pour atténuer les ondes sonores basses fréquences, ainsi qu'un deuxième résonateur de type ¼ d'ondes au niveau des cellules de la deuxième structure alvéolaire 14, adapté pour atténuer les ondes sonores hautes fréquences.

Selon ce deuxième mode de réalisation, chaque tube 24 est relié par une liaison 24.1 à la couche de séparation puis les première et deuxièmes structures alvéolaires 12, 14 sont reliées par des liaisons 12.1, 14.1 à la couche de séparation 20. Les cellules des première et deuxième structures alvéolaires 12, 14 doivent être parfaitement alignées afin que chaque cellule de la première structure alvéolaire 12 ne communique qu'avec une seule cellule de la deuxième structure alvéolaire 14.

Même si ce deuxième mode de réalisation permet d'atténuer les ondes sonores sur des plages de fréquences plus larges, il n'est pas pleinement satisfaisant car le nombre important de liaisons conduit à augmenter la masse de la structure d'absorption acoustique 10 et à complexifier son procédé de fabrication. Ce dernier est d'autant plus complexe à mettre en œuvre que les cellules des première et deuxième structures alvéolaires doivent être parfaitement alignées pour obtenir un fonctionnement optimal. Selon un autre inconvénient, une telle structure d'absorption acoustique nécessite au moins deux systèmes de drainage, un pour chacune des première et deuxième structures alvéolaires 12, 14, ce qui tend à complexifier la structure d'absorption acoustique. Enfin, la mise en forme selon un profil courbe de la structure d'absorption acoustique 10 s'avère difficile compte tenu des liaisons 12.1, 14.1 qui relient les extrémités des parois délimitant les cellules des première et deuxième parois alvéolaires 12, 14 avec la couche de séparation 20.

Le document CN115602142 divulgue un dispositif d'absorption acoustique est constitué d'une âme en nid d'abeille en aluminium, dont chaque alvéole contient un tube d'extension étagé de spécifications variables. L'ensemble est scellé entre une plaque microporeuse et un support rigide. Une extrémité de chaque tube est connectée à un micropore de la plaque, tandis qu'un espace est maintenu entre l'autre extrémité du tube et le support rigide.

La présente invention vise à remédier à tout ou partie des inconvénients de l'art antérieur. A cet effet, l'invention a pour objet une structure d'absorption acoustique selon la revendication 1.

Cette solution permet d'obtenir une structure alvéolaire comportant deux types de résonateurs configurés pour atténuer des ondes sonores sur une large bandes de fréquences ou sur plusieurs bandes de fréquences. Le fait de prévoir un tube de partition qui comprend un méplat fixé contre une paroi plane de la cellule permet de simplifier la fixation du tube de partition, confère une meilleure résistance à la liaison reliant le tube de partition et la structure alvéolaire et permet à la structure alvéolaire de conserver une certaine souplesse pour la conformer.

Selon une autre caractéristique, le méplat s'étend de la première extrémité jusqu'à la deuxième extrémité du premier conduit.

Selon une autre caractéristique, la paroi de fixation comprend un bord supérieur situé au niveau de la première face de la structure alvéolaire, un bord inférieur situé au niveau de la deuxième face de la structure alvéolaire ainsi que des bords latéraux droit et gauche reliant les bords supérieur et inférieur, le méplat étant positionné de manière centrée par rapport aux bords latéraux droit et gauche.

Selon une autre caractéristique, le premier conduit comprend au moins une paroi latérale distante des parois délimitant la cellule autres que la paroi de fixation.

Selon une autre caractéristique, le premier conduit comprend des première et deuxième parois latérales planes positionnées de part et d'autre du méplat ainsi qu'une paroi latérale courbe reliant les première et deuxième parois latérales planes.

Selon une autre caractéristique, les première et deuxième parois latérales planes forment entre elles un angle compris entre 40° et 140°.

Selon une autre caractéristique, chaque paroi latérale est espacée des parois délimitant la cellule autres que la paroi de fixation d'une distance comprise entre 5% et 50% du diamètre d'un cercle inscrit dans la première section du premier conduit.

Selon une autre caractéristique, la structure alvéolaire comprend plusieurs tubes de partition reliés à des parois de fixation de la structure alvéolaire orientées selon une direction unique. Selon une autre caractéristique, sur au moins une zone donnée de la structure alvéolaire, chaque cellule comprend un unique tube de partition, chaque paroi de fixation supportant un unique tube de partition.

Selon une autre caractéristique, sur au moins une zone donnée de la structure alvéolaire, chaque cellule comprend un unique tube de partition, les parois de fixation supportant chacune deux tubes de partition positionnés de part et d'autre de la paroi de fixation.

Selon une autre caractéristique, chaque tube de partition est une pièce réalisée d'un seul tenant.

L'invention a également pour objet un procédé de fabrication d'une structure d'absorption acoustique comprenant une étape de réalisation d'une structure alvéolaire ainsi que des étapes de mise en place d'une couche acoustiquement résistive et d'une couche réflectrice. Selon l'invention, le procédé comprend une étape d'insertion de chaque tube de partition dans une cellule ainsi qu'une étape de fixation du tube de partition inséré dans la cellule à une paroi de fixation de la cellule.

Selon une autre caractéristique, lors de l'étape de fixation de chaque tube de partition dans une cellule, au moins un élément de centrage est utilisé pour maintenir le tube de partition espacé des parois délimitant la cellule autres que la paroi de fixation.

Selon une autre caractéristique, le procédé de fabrication comprend une étape de découpe d'au moins un tube de partition dans une pièce comportant un tronçon central qui présente une section identique à celle du premier conduit du tube de partition ainsi que deux tronçons secondaires positionnés de part et d'autre du tronçon central et le prolongeant, chacun des tronçons secondaires présentant une section identique à celle du deuxième conduit du tube de partition.

Selon une autre caractéristique, le tronçon central présente une longueur supérieure à la somme des longueurs de deux premiers conduits. En complément, chaque tronçon secondaire présente une longueur supérieure à celle d'un deuxième conduit.

Selon un mode opératoire, les étapes de mise en place de la couche acoustiquement résistive et de la couche réflectrice sont réalisées après les étapes d'insertion et de fixation de chaque tube de partition.

Selon un autre mode opératoire, les étapes d'insertion et de fixation de chaque tube de partition sont réalisées après l'étape de mise en place de la couche acoustiquement résistive et avant celle de mise en place de la couche réflectrice.

Selon un autre mode opératoire, les étapes d'insertion et de fixation de chaque tube de partition sont réalisées après l'étape de mise en place de la couche réflectrice et avant celle de mise en place de la couche acoustiquement résistive.

D'autres caractéristiques et avantages ressortiront de la description de l'invention qui va suivre, description donnée à titre d'exemple uniquement, en regard des dessins annexés parmi lesquels :

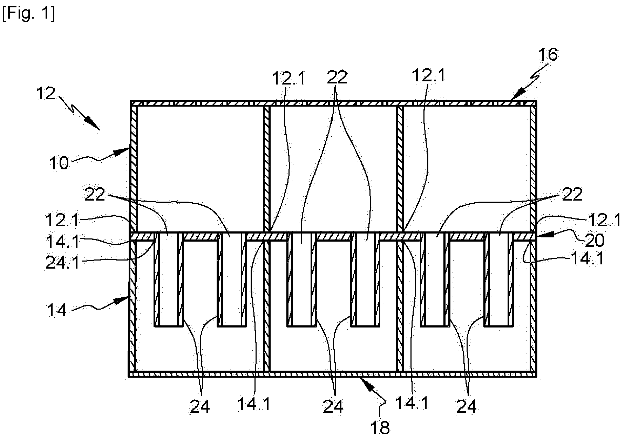

- La figure 1 est une coupe schématique d'une structure d'absorption acoustique illustrant un mode de réalisation de l'art antérieur,
- La figure 2 est une vue latérale d'un aéronef,
- La figure 3 est une coupe longitudinale d'une partie d'un ensemble de propulsion d'aéronef,
- La figure 4 est une coupe longitudinale d'une partie d'une structure d'absorption acoustique illustrant un mode de réalisation de l'invention,
- La figure 5 est une coupe longitudinale d'une partie d'une structure d'absorption acoustique illustrant un autre mode de réalisation de l'invention,
- La figure 6 est représentation schématique des différentes étapes d'un procédé de fabrication d'une structure d'absorption acoustique illustrant un mode de réalisation de l'invention,
- La figure 7 est représentation schématique des différentes étapes d'un procédé de fabrication d'une structure d'absorption acoustique illustrant un autre mode de réalisation de l'invention,
- La figure 8 est une vue en perspective d'une structure alvéolaire illustrant un mode de réalisation de l'invention,
- La figure 9 est une vue de dessus d'une structure alvéolaire illustrant un mode de réalisation de l'invention,

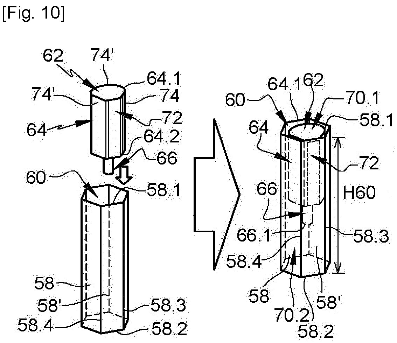

- La figure 10 est une représentation schématique d'une cellule d'une structure alvéolaire et d'un tube de partition, avant assemblage et après assemblage, illustrant un mode de réalisation de l'invention,
- La figure 11 est une vue dessus d'une cellule équipée d'un tube de partition illustrant un mode de réalisation de l'invention,
- La figure 12 est une vue latérale d'un tube de partition illustrant un mode de réalisation de l'invention,
- La figure 13 est une vue en perspective du tube de partition visible sur la figure 12,
- La figure 14 est une vue de dessus du tube de partition visible sur la figure 12,

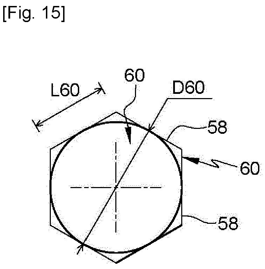

- La figure 15 est une vue de dessus d'une cellule d'une structure alvéolaire dans laquelle est positionné le tube de partition visible sur la figure 12,
- La figure 16 est une vue latérale d'une pièce comportant deux tubes de partition illustrant un mode de réalisation de l'invention,
- La figure 17 est une vue en perspective d'une structure alvéolaire illustrant différentes étapes d'assemblage.

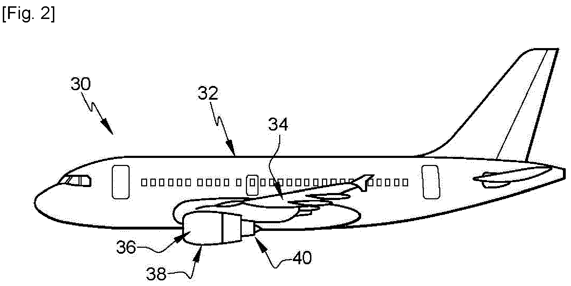

Sur la figure 2, on a représenté un aéronef 30 qui présente un fuselage 32, deux ailes 34 disposées de part et d'autre du fuselage 32 ainsi que des ensembles de propulsion 36 fixés sous les ailes 34. Chaque ensemble de propulsion 36 comprend une nacelle 38 et une turbomachine 40 positionnée à l'intérieur de la nacelle 38.

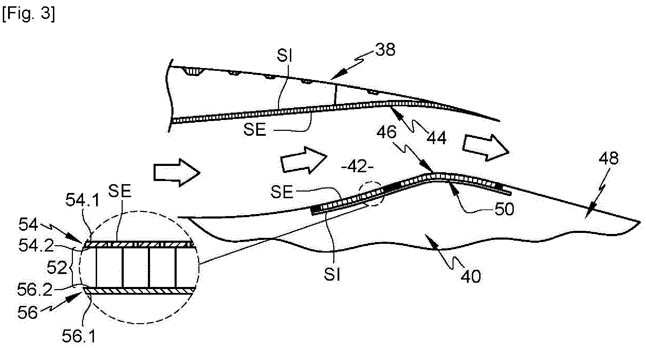

Selon un mode de réalisation visible sur la figure 3, la turbomachine 40 comprend, à l'arrière, un conduit d'éjection primaire 42, par lequel s'échappent des gaz brûlés dans la turbomachine 40, qui est délimité à l'extérieur par une paroi extérieure 44 et à l'intérieur par une paroi intérieure 46 prolongée par un cône de tuyère 48.

Selon une configuration, les parois extérieure et intérieure 44, 46 comprennent chacune au moins une structure d'absorption acoustique 50.

Chaque structure d'absorption acoustique 50 comprend une surface extérieure SE en contact avec un milieu dans lequel se propagent des ondes acoustiques et une surface intérieure SI opposée à la surface extérieure SE.

Bien que décrite appliquée à un conduit d'éjection primaire 42, l'invention n'est pas limitée à cette application. Ainsi, la structure d'absorption acoustique 50 peut être positionnée au niveau de parois qui présentent une surface extérieure SE en contact avec un milieu dans lequel se propagent des ondes sonores.

Chaque structure d'absorption acoustique 50 comprend au moins une structure alvéolaire 52 intercalée entre une couche acoustiquement résistive 54 perméable aux ondes sonores et une couche réflectrice 56 imperméable aux ondes sonores. La couche acoustiquement résistive 54 présente une première face 54.1 correspondant à la surface extérieure SE ainsi qu'une deuxième face 54.2 orientée vers la structure alvéolaire 52 et reliée à cette dernière. La couche réflectrice 56 présente une première face 56.1 correspondant à la surface intérieure SI ainsi qu'une deuxième face 56.2 orientée vers la structure alvéolaire 52 et reliée à cette dernière.

La couche acoustiquement résistive 54, la couche réflectrice 56, la liaison entre la couche acoustiquement résistive 54 et la structure alvéolaire 52 ainsi que la liaison entre la couche réflectrice 56 et la structure alvéolaire 52 ne sont pas plus décrites car elles peuvent être identiques à celles de l'art antérieur.

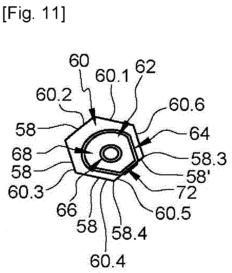

La structure alvéolaire 52 s'étend entre une première face 52.1 en contact avec la couche acoustiquement résistive 54 ainsi qu'une deuxième face 52.2 en contact avec la couche réflectrice 56 et comprend une multitude de parois 58 sensiblement rectangulaires qui présentent chacune des premiers et deuxièmes bords positionnés respectivement au niveau des première et deuxième faces 52.1, 52.2. Ces parois 58 sont reliées entre elles de manière à délimiter des cellules 60 débouchant au niveau des première et deuxième faces 52.1, 52.2. Selon un mode de réalisation, la structure alvéolaire 52 est une structure en nid d'abeilles. Comme illustré sur la figure 11, chaque cellule 60 est délimitée par six faces 60.1 à 60.6 et présente une section hexagonale avec six côtés identiques de largeur L60. Chaque cellule 60 hexagonale comprend un cercle inscrit de diamètre cellule D60. Le diamètre cellule D60 est compris entre 9,6 et 19.1 mm. Chaque cellule 60 présente une hauteur cellule H60 qui correspond à la distance séparant les première et deuxième faces 52.1, 52.2. La hauteur cellule H60 est comprise entre 30 et 70 mm. Chaque paroi 58 rectangulaire présente une longueur égale à la hauteur cellule H60, comprise entre 30 et 70 mm, ainsi qu'une largeur comprise entre environ 5 et 12 mm.

Bien entendu, l'invention n'est pas limitée à ce mode de réalisation pour les cellules 60. Chacune d'elles débouche au niveau de première et deuxième extrémités obturées respectivement par la couche acoustiquement résistive 54 et la couche réflectrice 56. Chacune d'elles est délimitée par des parois (58) dont une paroi de fixation 58' plane.

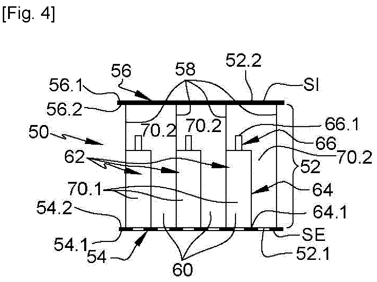

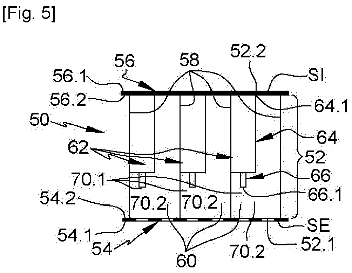

La structure alvéolaire 52 comprend au moins un tube de partition 62 positionné dans une cellule 60. Selon une configuration, la structure alvéolaire 52 comprend plusieurs tubes de partition 62 positionnés chacun dans une cellule 60. Selon un agencement, dans au moins une zone de la structure alvéolaire 52, cette dernière comprend un tube de partition 62 dans chaque cellule 60, comme illustré sur les figures 4 et 5.

Chaque tube de partition 62 comprend un premier conduit 64 qui s'étend entre des première et deuxième extrémités 64.1, 64.2 et présente une première section S1 entre les première et deuxième extrémités 64.1, 64.2, un deuxième conduit 66 qui s'étend entre des première et deuxième extrémités 66.1, 66.2 et présente une deuxième section S2 entre les première et deuxième extrémités 66.1, 66.2, la deuxième section S2 étant inférieure à la première section S1, ainsi qu'une paroi de jonction 68 reliant les deuxièmes extrémités 64.2, 66.2 des premier et deuxième conduits 64, 66. Selon une configuration, la deuxième section S2 est inférieure de 25% à la première section S1, de préférence inférieure de 15%.

Chaque tube de partition 62 est réalisé d'un seul tenant, les premier et deuxième conduits 64, 66 ainsi que la paroi de jonction 68 étant réalisés lors d'une même étape de fabrication.

Selon un mode de réalisation, la première section S1 est constante sur une première hauteur H1, entre les première et deuxième extrémités 64.1, 64.2. Ainsi, le premier conduit 64 présente un premier axe A64. La première hauteur H1 est comprise entre 1 et 20 mm. Selon un agencement, la première hauteur H1 est comprise entre 25% et 75% de la hauteur cellule H60. Selon une configuration, la première hauteur H1 est sensiblement égale à la moitié de la hauteur cellule H60.

Selon un mode de réalisation, la deuxième section S2 est constante sur une deuxième hauteur H2, entre les première et deuxième extrémités 66.1, 66.2. Ainsi, le deuxième conduit 66 présente un deuxième axe A66. Selon un mode de réalisation, la deuxième section S2 est circulaire. Selon une configuration, la deuxième section S2 est comprise entre 0,15 mm² et 20 mm², ce qui correspond respectivement à des diamètres d'environ 0,5 mm et 5 mm. La deuxième hauteur H2 est comprise entre 10 et 25 mm.

Selon un agencement, les premier et deuxième axes A64 et A66 sont alignés.

Selon un mode de réalisation, la paroi de jonction 68 est située dans un plan perpendiculaire au premier axe A64, soit sensiblement perpendiculaire au premier conduit 64. Bien entendu, l'invention n'est pas limitée à ce mode de réalisation pour la paroi de jonction 68. Cette dernière pourrait ne pas être plane et être tronconique par exemple.

Selon un premier mode de réalisation visible sur la figure 4, la première extrémité 64.1 du premier conduit 64 est positionnée au niveau de la première face 52.1 de la structure alvéolaire 52 afin d'être obturée par la couche acoustiquement résistive 54 et reliée à cette dernière de manière étanche. La première extrémité 66.1 du deuxième conduit 66 est espacée de la couche réflectrice 56 et de la deuxième face 52.2 de la structure alvéolaire 52 d'une distance comprise entre 0,5mm et 70% de la hauteur cellule H60.

Selon un deuxième mode de réalisation visible sur la figure 5, la première extrémité 64.1 du premier conduit 64 est positionnée au niveau de la première face 52.2 de la structure alvéolaire 52 afin d'être obturée par la couche réflectrice 56 et reliée à cette dernière de manière étanche. La première extrémité 66.1 du deuxième conduit 66 est espacée de la couche acoustiquement résistive 54 et de la première face 52.1 de la structure alvéolaire 52 d'une distance comprise entre 0,5mm et 70% de la hauteur cellule H60.

Quel que soit le mode de réalisation, le tube de partition 62 scinde la cellule 60 dans laquelle il est positionné en des première et deuxième cavités 70.1, 70.2, la première cavité 70.1 étant située à l'intérieur du tube de partition 62 et délimitée par le tube de partition 62 et une première couche parmi la couche acoustique résistive 54 et la couche réflectrice 56, la deuxième cavité 70.2 étant située à l'extérieur du tube de partition 62 et délimitée par les parois 58 de la structure alvéolaire 52, le tube de partition 62, la couche réflectrice 56 et la couche acoustiquement résistive 54, les première et deuxième cavités 70.1, 70.2 communiquant via le deuxième conduit 66. Ainsi, l'une des cavités 70.1, 70.2 forme un premier résonateur de type Helmholtz adapté pour atténuer les ondes sonores basses fréquences. En complément, l'autre cavité 70.1, 70.2 forme un deuxième résonateur de type ¼ d'ondes adapté pour atténuer les ondes sonores hautes fréquences.

Cette solution permet d'obtenir une structure d'absorption acoustique configurée pour atténuer des ondes sonores sur une large bande de fréquences ou sur plusieurs bandes de fréquences.

Selon le mode de réalisation visible sur la figure 4, la première cavité 70.1 forme un premier résonateur de type Helmholtz adapté pour atténuer les ondes sonores basses fréquences. En complément, la deuxième cavité 70.2 forme un deuxième résonateur de type ¼ d'ondes adapté pour atténuer les ondes sonores hautes fréquences.

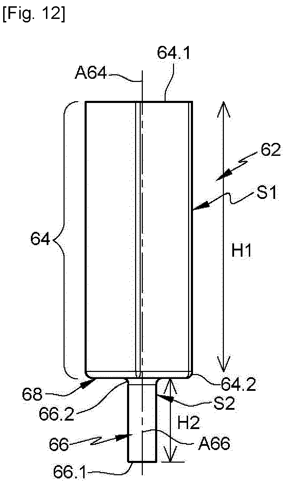

Selon une particularité de l'invention visible sur les figures 12 à 14, le premier conduit 64 du tube de partition 66 comprend un méplat 72 plaqué contre une paroi de la cellule dite par la suite paroi de fixation 58' et fixé à cette dernière ainsi qu'au moins une paroi latérale 74 distante des autres parois de la cellule 60, appelées parois restantes 58.

Le méplat 72 est fixé à la paroi de fixation 58' par tout moyen approprié, comme par collage, soudage, agrafage ou autres, en fonction de la nature des éléments à assembler.

Selon une configuration, le méplat 72 s'étend sur toute la hauteur du premier conduit 64, de la première extrémité 64.1 jusqu'à la deuxième extrémité 64.2.

Selon un mode de réalisation, la paroi de fixation 58' de la cellule 60 à laquelle est relié le méplat 72 comprend un bord supérieur 58.1 situé au niveau de la première face 52.1 de la structure alvéolaire 52, un bord inférieur 58.2 situé au niveau de la deuxième face 52.2 de la structure alvéolaire ainsi que des bords latéraux droit et gauche 58.3, 58.4 reliant les bords supérieur et inférieur 58.1, 58.2.

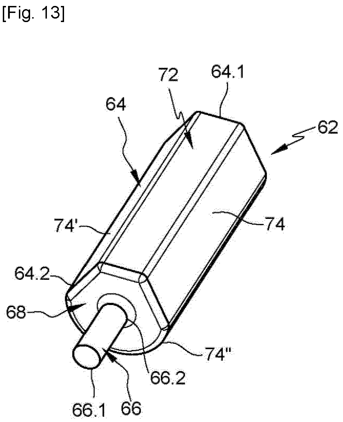

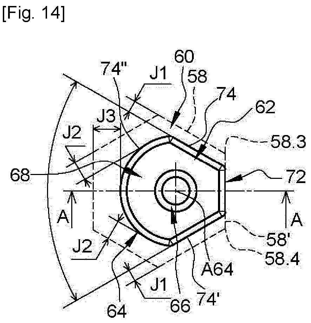

Comme illustré sur les figures 11 et 14, le méplat 72 est positionné de manière centrée par rapport aux bords latéraux droit et gauche 58.3, 58.4. Le méplat 72 s'étend à partir du bord supérieur 58.1, comme illustré sur la figure 13.

Chaque paroi latérale 74 est espacée des parois restantes 58 de la cellule 60 d'une distance sensiblement constante.

Selon une configuration, le premier conduit 64 comprend, en plus du méplat 72, des première et deuxième parois latérales planes 74, 74' positionnées de part et d'autre du méplat 72 ainsi qu'une paroi latérale courbe 74" reliant les première et deuxième parois latérales planes 74, 74'.

Les première et deuxième parois latérales planes 74, 74' forment entre elles un angle compris entre 40° et 140°. Selon un agencement, les première et deuxième parois latérales planes 74, 74' sont respectivement parallèles aux parois restantes 58, positionnées de part et d'autre de la paroi de fixation 58'. Les première et deuxième parois latérales planes 74, 74' sont espacées des parois restantes 58 leur faisant face d'une distance J1 comprise entre 5% et 50% du diamètre D60 du cercle inscrit dans la première section S1.

La paroi latérale courbe 74" est une portion cylindrique présentant un axe confondu avec le premier axe A64 du premier conduit 64. La paroi latérale courbe 74" est espacée des parois restantes 58 les plus proches d'une distance J2, J3 comprise entre 5% et 50% du diamètre D60 du cercle inscrit dans la première section S1.

Selon l'invention, le tube de partition 62 est relié à une seule paroi 58' de la chaque cellule 60. Ainsi, la structure alvéolaire 52 conserve une grande flexibilité, lui permettant d'être mise en forme.

Selon une configuration, les tubes de partition 62 sont reliés à des parois de fixation 58' de la structure alvéolaire 52 orientées selon une direction unique et parallèles entre elles.

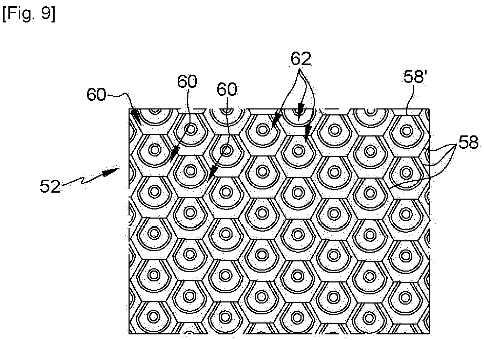

Selon un agencement visible sur la figure 9, sur au moins une zone donnée de la structure alvéolaire 52, chaque cellule 60 comprend un unique tube de partition 62, chaque paroi de fixation 58' supportant un unique tube de partition 62, les parois de fixation 58' étant parallèles entre elles et orientées selon une unique orientation.

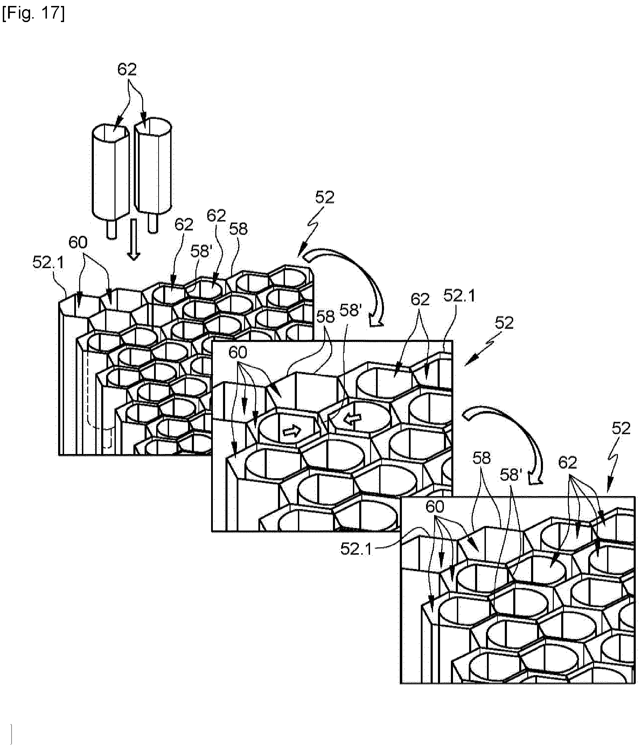

Selon un autre agencement visible sur la figure 17, sur au moins une zone donnée de la structure alvéolaire 52, chaque cellule 60 comprend un unique tube de partition 62. Les parois de fixation 58' supportent chacune deux tubes de partition 62 positionnés de part et d'autre de la paroi de fixation 58', les parois de fixation 58' étant parallèles entre elles et orientées selon une unique orientation.

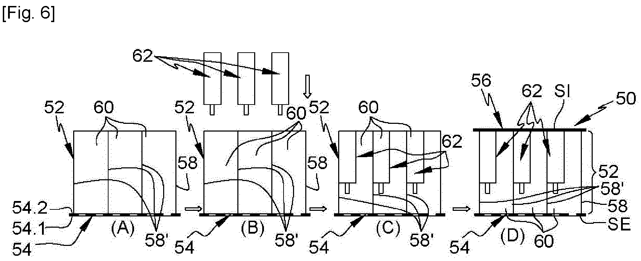

Selon un premier mode de réalisation visible sur la figure 6, un procédé de fabrication d'une structure d'absorption acoustique comprend une étape de réalisation d'une structure alvéolaire 52 comprenant des première et deuxième faces 52.1, 52.2 planes, une étape de mise en place de la couche acoustiquement résistive 54 sur la première face 52.1 de la structure alvéolaire 52 comme illustré sur la partie (A) de la figure 6, une étape d'insertion de chaque tube de partition 62 dans une cellule 60 comme illustré sur la partie (B) de la figure 6, une étape de fixation du tube de partition 62 inséré dans la cellule 60 à une paroi de fixation 58' de la cellule 60 comme illustré sur la partie (C) de la figure 6, d'éventuelles étapes de rainurage et de formage de la structure alvéolaire 52 ainsi qu'une étape de mise en place de la couche réflectrice 56 sur la deuxième face 52.2 de la structure alvéolaire 52 comme illustré sur la partie (D) de la figure 6.

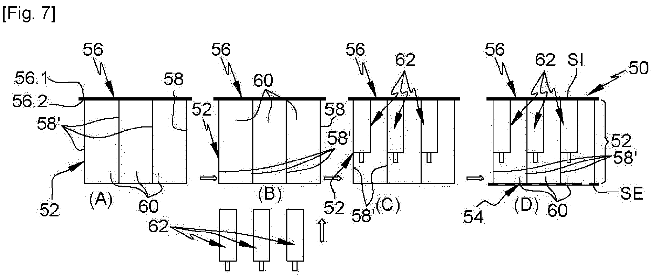

Selon un deuxième mode de réalisation visible sur la figure 7, un procédé de fabrication d'une structure d'absorption acoustique comprend une étape de réalisation d'une structure alvéolaire 52 comprenant des première et deuxième faces 52.1, 52.2 planes, une étape de mise en place de la couche réflectrice 56 sur la deuxième face 52.2 de la structure alvéolaire 52 comme illustré sur la partie (A) de la figure 7, une étape d'insertion de chaque tube de partition 62 dans une cellule 60 comme illustré sur la partie (B) de la figure 7, une étape de fixation du tube de partition 62 inséré dans la cellule 60 à une paroi de fixation 58' de la cellule 60 comme illustré sur la partie (C) de la figure 7, d'éventuelles étapes de rainurage et de formage de la structure alvéolaire 52 ainsi qu'une étape de mise en place de la couche acoustiquement résistive 54 sur la première face 52.1 de la structure alvéolaire 52 comme illustré sur la partie (D) de la figure 7.

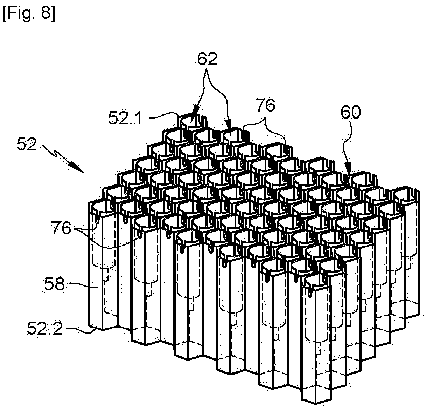

Selon un autre mode de réalisation, un procédé de fabrication d'une structure d'absorption acoustique comprend une étape de réalisation d'une structure alvéolaire 52 comprenant des première et deuxième faces 52.1, 52.2 planes, une étape d'insertion de chaque tube de partition 62 dans une cellule 60, une étape de fixation du tube de partition 62 inséré dans la cellule 60 à une paroi de fixation 58' de la cellule 60, une étape de rainurage visant à réaliser des rainures 76 au niveau de la première face 52.1 de la structure alvéolaire 52 afin de former un système de drainage visible sur la figure 8, une étape de formage de la structure alvéolaire 52 ainsi que des étapes de mise en place d'une couche acoustiquement résistive 54 et d'une couche réflectrice 56 réalisées après l'étape de fixation des tubes de partition 62 dans les cellules 60 de la structure alvéolaire 52.

L'étape d'insertion des tubes de partition 62 peut se faire à l'unité, tube de partition après tube de partition, ou à plusieurs, plusieurs tubes de partition étant insérés simultanément.

L'étape d'insertion des tubes de partition 62 peut être mécanisée et/ou réalisée avant ou après l'étape de formage.

Selon un mode opératoire, lors de l'étape de fixation de chaque tube de partition 62, au moins un élément de centrage est utilisé pour maintenir le tube de partition 62 espacé des parois restantes 58.

Selon un mode de réalisation, la structure alvéolaire 52 peut être métallique ou en matériau composite. Les tubes de partition 62 peuvent être métalliques, en matériau composite ou en matière plastique.

Lorsqu'ils sont en matière plastique, les tubes de partition 62 peuvent être produits par un procédé d'extrusion soufflage, d'injection ou d'estampage par exemple.

Selon un mode opératoire, le procédé de fabrication comprend une étape de découpe d'au moins un tube de partition dans une pièce 78.

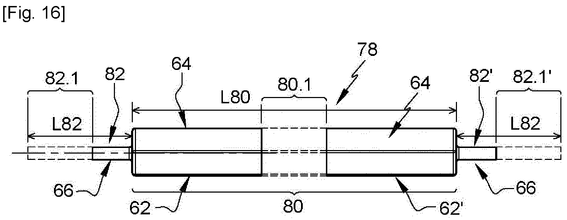

Ainsi, comme illustré sur la figure 16, deux tubes de partition 62, 62' peuvent être découpées dans une même pièce 78 réalisée d'un seul tenant. Cette pièce 78 comprend un tronçon central 80 qui présente une section identique à celle du premier conduit 64 de chaque tube de partition 62, 62' ainsi que deux tronçons secondaires 82, 82' positionnés de part et d'autre du tronçon central 80 et le prolongeant, chacun des tronçons secondaires 82, 82' présentant une section identique à celle du deuxième conduit 66 de chaque tube de partition 62, 62'. Le tronçon central 80 présente une longueur L80 supérieure à la somme des longueurs de deux premiers conduits 64. Ainsi, ce tronçon central 80 comprend deux premiers conduits 64 de deux tubes de partition 62, 62' et une surlongueur 80.1. En complément, chaque tronçon secondaire 82, 82' présente une longueur L82, L82' supérieure à la celle du deuxième conduit 66 des tubes de partition 62, 62'. Ainsi, chaque tronçon secondaire 82, 82' comprend un deuxième conduit 66 d'un tube de partition 62, 62' et une surlongueur 82.1, 82.1'. Selon ce mode de réalisation, à partir d'une unique pièce 78 réalisée d'un seul tenant, il est possible de découper deux tubes de partition 62, 62', chacun d'eux présentant un premier conduit 64 avec une longueur adaptée qui peut être différente d'un tube de partition à l'autre. De plus, il est possible de découper les deux tronçons secondaires 82, 82' afin d'ajuster la longueur du deuxième conduit 66 de chacun des tubes de partition 62, 62'.

Bien entendu, l'invention n'est pas limitée à ce mode de production pour les tubes de réparation.

## Revendications

1. Structure d'absorption acoustique comprenant au moins une structure alvéolaire (52) intercalée entre une couche acoustiquement résistive (54) et une couche réflectrice (56), la structure alvéolaire (52) comprenant une première face (52.1) en contact avec la couche acoustiquement résistive (54), une deuxième face (52.2) en contact avec la couche réflectrice (56) ainsi qu'une multitude de cellules (60) débouchant chacune au niveau des première et deuxième faces (52.1, 52.2), chaque cellule (60) étant délimitée par des parois (58, 58') ; la structure alvéolaire (52) comprenant au moins un tube de partition (62), positionné dans une des cellules (60), comportant un premier conduit (64) qui s'étend entre des première et deuxième extrémités (64.1, 64.2) et présente une première section (S1) entre les première et deuxième extrémités (64.1, 64.2), un deuxième conduit (66) qui s'étend entre des première et deuxième extrémités (66.1, 66.2) et présente une deuxième section (S2) entre les première et deuxième extrémités (66.1, 66.2), la deuxième section (S2) étant inférieure à la première section (S1), ainsi qu'une paroi de jonction (68) reliant les deuxièmes extrémités (64.2, 66.2) des premier et deuxième conduits (64, 66), la première extrémité (64.1) du premier conduit (64) étant obturée par une première couche parmi la couche acoustiquement résistive (54) et la couche réflectrice (56), la première extrémité (66.1) du deuxième conduit (66) étant espacée d'une deuxième couche, différente de la première couche, parmi la couche acoustiquement résistive (54) et la couche réflectrice (56), la structure alvéolaire (52) **étant caractérisée en ce que** le premier conduit (64) du tube de partition (66) comporte un méplat (72), les parois (58, 58') qui délimitent la cellule (60) dans laquelle est inséré le tube de partition (62) comportant une paroi de fixation (58') plane contre laquelle est plaqué et fixé le méplat (72) du tube de partition (62).

2. Structure d'absorption acoustique selon la revendication 1, **caractérisée en ce que** le méplat (72) s'étend de la première extrémité (64.1) jusqu'à la deuxième extrémité (64.2) du premier conduit (64).

3. Structure d'absorption selon l'une des revendications précédentes, **caractérisée en ce que** la paroi de fixation (58') comprend un bord supérieur (58.1) situé au niveau de la première face (52.1) de la structure alvéolaire (52), un bord inférieur (58.2) situé au niveau de la deuxième face (52.2) de la structure alvéolaire ainsi que des bords latéraux droit et gauche (58.3, 58.4) reliant les bords supérieur et inférieur (58.1, 58.2) et **en ce que** le méplat (72) est positionné de manière centrée par rapport aux bords latéraux droit et gauche (58.3, 58.4).

4. Structure d'absorption acoustique selon l'une des revendications précédentes, **caractérisée en ce que** le premier conduit (64) comprend au moins une paroi latérale (74) distante des parois (58) délimitant la cellule (60) autres que la paroi de fixation (58').

5. Structure d'absorption acoustique selon la revendication précédente, **caractérisée en ce que** le premier conduit (64) comprend des première et deuxième parois latérales planes (74, 74') positionnées de part et d'autre du méplat (72) ainsi qu'une paroi latérale courbe (74") reliant les première et deuxième parois latérales planes (74, 74').

6. Structure d'absorption acoustique selon la revendication précédente, **caractérisée en ce que** les première et deuxième parois latérales planes (74, 74') forment entre elles un angle compris entre 40° et 140°.

7. Structure d'absorption acoustique selon l'une des revendications 4 à 6, **caractérisée en ce que** chaque paroi latérale (74) est espacée des parois (58) délimitant la cellule (60) autres que la paroi de fixation (58') d'une distance comprise entre 5% et 50% du diamètre d'un cercle inscrit dans la première section (S1) du premier conduit (64).

8. Structure d'absorption acoustique selon l'une des revendications précédentes, **caractérisée en ce que** la structure alvéolaire (52) comprend plusieurs tubes de partition (62) reliés à des parois de fixation (58') de la structure alvéolaire (52) orientées selon une unique direction.

9. Structure d'absorption acoustique selon la revendication précédente, **caractérisée en ce que** sur au moins une zone donnée de la structure alvéolaire (52), chaque cellule (60) comprend un unique tube de partition (62), chaque paroi de fixation (58') supportant un unique tube de partition (62).

10. Structure d'absorption acoustique selon la revendication 8, **caractérisée en ce que** sur au moins une zone donnée de la structure alvéolaire (52), chaque cellule (60) comprend un unique tube de partition (62), les parois de fixation (58') supportant chacune deux tubes de partition (62) positionnés de part et d'autre de la paroi de fixation (58').

11. Structure d'absorption acoustique selon l'une des revendications précédentes, **caractérisée en ce que** chaque tube de partition (62) est une pièce réalisée d'un seul tenant.

12. Procédé de fabrication d'une structure d'absorption acoustique selon l'une des revendications précédentes, ledit procédé comprenant une étape de réalisation d'une structure alvéolaire (52) ainsi que des étapes de mise en place d'une couche acoustiquement résistive (54) et d'une couche réflectrice (56), **caractérisé en ce que** le procédé comprend une étape d'insertion de chaque tube de partition (62) dans une cellule (60) ainsi qu'une étape de fixation du tube de partition (62) inséré dans la cellule (60) à une paroi de fixation (58') de la cellule (60).

13. Procédé de fabrication selon la revendication précédente, **caractérisé en ce que** lors de l'étape de fixation de chaque tube de partition (62) dans une cellule, au moins un élément de centrage est utilisé pour maintenir le tube de partition (62) espacé des parois (58) délimitant la cellule (60) autres que la paroi de fixation (58').

14. Procédé de fabrication selon l'une des revendications 12 à 13, **caractérisé en ce que** le procédé de fabrication comprend une étape de découpe d'au moins un tube de partition (62, 62') dans une pièce (68) comportant un tronçon central (80) qui présente une section identique à celle du premier conduit (64) du tube de partition (62, 62') ainsi que deux tronçons secondaires (82, 82') positionnés de part et d'autre du tronçon central (80) et le prolongeant, chacun des tronçons secondaires (82, 82') présentant une section identique à celle du deuxième conduit (66) du tube de partition (62, 62').

15. Procédé de fabrication selon la revendication précédente, **caractérisé en ce que** le tronçon central (80) présente une longueur supérieure à la somme des longueurs de deux premiers conduits (64) et **en ce que** chaque tronçon secondaire (82, 82') présente une longueur supérieure à la celle d'un deuxième conduit (66).

16. Procédé de fabrication selon l'une des revendications 12 à 15, **caractérisé en ce que** les étapes de mise en place de la couche acoustiquement résistive (54) et de la couche réflectrice (56) sont réalisées après les étapes d'insertion et de fixation de chaque tube de partition (62).

17. Procédé de fabrication selon l'une des revendications 12 à 15, **caractérisé en ce que** les étapes d'insertion et de fixation de chaque tube de partition (62) sont réalisées après l'étape de mise en place de la couche acoustiquement résistive (54) et avant l'étape de mise en place de la couche réflectrice (56).

18. Procédé de fabrication selon l'une des revendications 12 à 15, **caractérisé en ce que** les étapes d'insertion et de fixation de chaque tube de partition (62) sont réalisées après l'étape de mise en place de la couche réflectrice (56) et avant l'étape de mise en place de la couche acoustiquement résistive (54).

## Patentansprüche

1. Schallabsorptionsstruktur, die mindestens eine Wabenstruktur (52) umfasst, die zwischen einer akustisch resistiven Schicht (54) und einer reflektierenden Schicht (56) angeordnet ist, wobei die Wabenstruktur (52) eine mit der akustisch resistiven Schicht (54) in Kontakt stehende erste Seite (52.1), eine mit der reflektierenden Schicht (56) in Kontakt stehende zweite Seite (52.2) sowie eine Vielzahl von Zellen (60), die jeweils an den ersten und zweiten Seiten (52.1, 52.2) münden, umfasst, wobei jede Zelle (60) durch Wände (58, 58') begrenzt wird; wobei die Wabenstruktur (52) mindestens ein Teilerrohr (62) umfasst, das in einer der Zellen (60) positioniert ist und einen ersten Kanal (64), der sich zwischen ersten und zweiten Enden (64.1, 64.2) erstreckt und einen ersten Querschnitt (S1) zwischen den ersten und zweiten Enden (64.1, 64.2) aufweist, einen zweiten Kanal (66), der sich zwischen ersten und zweiten Enden (66.1, 66.2) erstreckt und einen zweiten Querschnitt (S2) zwischen den ersten und zweiten Enden (66.1, 66.2) aufweist, wobei der zweite Querschnitt (S2) kleiner als der erste Querschnitt (S1) ist, sowie eine Verbindungswand (68), welche die zweiten Enden (64.2, 66.2) der ersten und zweiten Kanäle (64, 66) verbindet, beinhaltet, wobei das erste Ende (64.1) des ersten Kanals (64) durch eine erste Schicht unter der akustisch resistiven Schicht (54) und der reflektierenden Schicht (56) verschlossen wird, wobei das erste Ende (66.1) des zweiten Kanals (66) von einer zweiten Schicht, von der ersten Schicht verschiedenen ist, unter der akustisch resistiven Schicht (54) und der reflektierenden Schicht (56) beabstandet ist, wobei die Wabenstruktur (52) **dadurch gekennzeichnet ist, dass** der erste Kanal (64) des Teilerrohrs (66) eine Abplattung (72) beinhaltet, wobei die Wände (58, 58'), welche die Zelle (60) begrenzen, in die das Teilerrohr (62) eingesetzt ist, eine ebene Befestigungswand (58') beinhalten, an welche die Abplattung (72) des Teilerrohrs (62) gedrückt wird und an der sie befestigt wird.

2. Schallabsorptionsstruktur nach Anspruch 1, **dadurch gekennzeichnet, dass** sich die Abplattung (72) von dem ersten Ende (64.1) bis zu dem zweiten Ende (64.2) des ersten Kanals (64) erstreckt.

3. Absorptionsstruktur nach einem der vorhergehenden Ansprüche, **dadurch gekennzeichnet, dass** die Befestigungswand (58') einen an der ersten Seite (52.1) der Wabenstruktur (52) gelegenen oberen Rand (58.1), einen an der zweiten Seite (52.2) der Wabenstruktur gelegenen unteren Rand (58.2) sowie rechte und linke seitliche Ränder (58.3, 58.4), die die oberen und unteren Ränder (58.1, 58.2) verbinden, umfasst, und dass die Abplattung (72) in Bezug auf die rechten und linken seitlichen Ränder (58.3, 58.4) zentriert positioniert ist.

4. Schallabsorptionsstruktur nach einem der vorhergehenden Ansprüche, **dadurch gekennzeichnet, dass** der erste Kanal (64) mindestens eine Seitenwand (74) umfasst, die von den die Zelle (60) begrenzenden Wänden (58) außer der Befestigungswand (58') entfernt ist.

5. Schallabsorptionsstruktur nach dem vorhergehenden Anspruch, **dadurch gekennzeichnet, dass** der erste Kanal (64) erste und zweite ebene Seitenwände (74, 74'), die zu beiden Seiten der Abplattung (72) positioniert sind, sowie eine gekrümmte Seitenwand (74"), die die ersten und zweiten ebenen Seitenwände (74, 74') verbindet, umfasst.

6. Schallabsorptionsstruktur nach dem vorhergehenden Anspruch, **dadurch gekennzeichnet, dass** die ersten und zweiten ebenen Seitenwände (74, 74') zwischen sich einen Winkel zwischen 40° und 140° bilden.

7. Schallabsorptionsstruktur nach einem der Ansprüche 4 bis 6, **dadurch gekennzeichnet, dass** jede Seitenwand (74) von den die Zelle (60) begrenzenden Wänden (58) außer der Befestigungswand (58') um einen Abstand zwischen 5 % und 50 % des Durchmessers eines in den ersten Querschnitt (S1) des ersten Kanals (64) einbeschriebenen Kreises beabstandet ist.

8. Schallabsorptionsstruktur nach einem der vorhergehenden Ansprüche, **dadurch gekennzeichnet, dass** die Wabenstruktur (52) mehrere Teilerrohre (62) umfasst, die mit entlang einer einzigen Richtung ausgerichteten Befestigungswänden (58') der Wabenstruktur (52) verbunden sind.

9. Schallabsorptionsstruktur nach dem vorhergehenden Anspruch, **dadurch gekennzeichnet, dass** jede Zelle (60) über mindestens einen gegebenen Bereich der Wabenstruktur (52) ein einziges Teilerrohr (62) umfasst, wobei jede Befestigungswand (58') ein einziges Teilerrohr (62) trägt.

10. Schallabsorptionsstruktur nach Anspruch 8, **dadurch gekennzeichnet, dass** jede Zelle (60) über mindestens einen gegebenen Bereich der Wabenstruktur (52) ein einziges Teilerrohr (62) umfasst, wobei die Befestigungswände (58') jeweils zwei Teilerrohre (62) tragen, die zu beiden Seiten der Befestigungswand (58') positioniert sind.

11. Schallabsorptionsstruktur nach einem der vorhergehenden Ansprüche, **dadurch gekennzeichnet, dass** jedes Teilerrohr (62) ein einstückig ausgeführtes Teil ist.

12. Herstellungsverfahren für eine Schallabsorptionsstruktur nach einem der vorhergehenden Ansprüche, wobei das Verfahren einen Schritt des Ausführens einer Wabenstruktur (52) sowie Schritte des Anordnens einer akustisch resistiven Schicht (54) und einer reflektierenden Schicht (56) umfasst, **dadurch gekennzeichnet, dass** das Verfahren einen Schritt des Einsetzens jedes Teilerrohrs (62) in eine Zelle (60) sowie einen Schritt des Befestigens des in die Zelle (60) eingesetzten Teilerrohrs (62) an einer Befestigungswand (58') der Zelle (60) umfasst.

13. Herstellungsverfahren nach dem vorhergehenden Anspruch, **dadurch gekennzeichnet, dass** bei dem Schritt des Befestigens jedes Teilerrohrs (62) in einer Zelle mindestens ein Zentrierelement verwendet wird, um das Teilerrohr (62) von den die Zelle (60) begrenzenden Wänden (58) außer der Befestigungswand (58') beabstandet zu halten.

14. Herstellungsverfahren nach einem der Ansprüche 12 bis 13, **dadurch gekennzeichnet, dass** das Herstellungsverfahren einen Schritt des Schneidens mindestens eines Teilerrohrs (62, 62') aus einem Teil (68) umfasst, das einen zentralen Abschnitt (80), der einen Querschnitt aufweist, der identisch mit dem des ersten Kanals (64) des Teilerrohrs (62, 62') ist, sowie zwei zu beiden Seiten des zentralen Abschnitts (80) positionierte und diesen verlängernde sekundäre Abschnitte (82, 82') beinhaltet, wobei jeder der sekundären Abschnitte (82, 82') einen Querschnitt aufweist, der identisch mit dem des zweiten Kanals (66) des Teilerrohrs (62, 62') ist.

15. Herstellungsverfahren nach dem vorhergehenden Anspruch, **dadurch gekennzeichnet, dass** der zentrale Abschnitt (80) eine Länge aufweist, die größer als die Summe der Längen von zwei ersten Kanälen (64) ist, und dass jeder sekundäre Abschnitt (82, 82') eine Länge aufweist, die größer als die eines zweiten Kanals (66) ist.

16. Herstellungsverfahren nach einem der Ansprüche 12 bis 15, **dadurch gekennzeichnet, dass** die Schritte des Anordnens der akustischen resistiven Schicht (54) und der reflektierenden Schicht (56) nach den Schritten des Einsetzens und Befestigens jedes Teilerrohrs (62) ausgeführt werden.

17. Herstellungsverfahren nach einem der Ansprüche 12 bis 15, **dadurch gekennzeichnet, dass** die Schritte des Einsetzens und Befestigens jedes Teilerrohrs (62) nach dem Schritt des Anordnens der akustisch resistiven Schicht (54) und vor dem Schritt des Anordnens der reflektierenden Schicht (56) ausgeführt werden.

18. Herstellungsverfahren nach einem der Ansprüche 12 bis 15, **dadurch gekennzeichnet, dass** die Schritte des Einsetzens und Befestigens jedes Teilerrohrs (62) nach dem Schritt des Anordnens der reflektierenden Schicht (56) und vor dem Schritt des Anordnens der akustisch resistiven Schicht (54) ausgeführt werden.

## Claims

1. Acoustic absorption structure comprising at least one honeycomb structure (52) interposed between an acoustically resistive layer (54) and a reflective layer (56), the honeycomb structure (52) comprising a first face (52.1) in contact with the acoustically resistive layer (54), a second face (52.2) in contact with the reflective layer (56) and a multitude of cells (60) each open at the first and second faces (52.1, 52.2), each cell (60) being delimited by walls (58, 58'); the honeycomb structure (52) comprising at least one partition tube (62), positioned in one of the cells (60), comprising a first conduit (64) which extends between first and second ends (64.1, 64.2) and has a first cross section (S1) between the first and second ends (64.1, 64.2), a second conduit (66) which extends between first and second ends (66.1, 66.2) and has a second cross section (S2) between the first and second ends (66.1, 66.2), the second cross section (S2) being smaller than the first cross section (S1), and a junction wall (68) connecting the second ends (64.2, 66.2) of the first and second conduits (64, 66), the first end (64.1) of the first conduit (64) being closed off by a first layer selected from the acoustically resistive layer (54) and the reflective layer (56), the first end (66.1) of the second conduit (66) being spaced apart from a second layer, which is different from the first layer, selected from the acoustically resistive layer (54) and the reflective layer (56), the honeycomb structure (52) being **characterized in that** the first conduit (64) of the partition tube (66) comprises a flat portion (72), the walls (58, 58') which delimit the cell (60) into which the partition tube (62) is inserted, comprising a planar fastening wall (58') against which the flat portion (72) of the partition tube (62) is pressed and fastened.

2. Acoustic absorption structure according to Claim 1, **characterized in that** the flat portion (72) extends from the first end (64.1) to the second end (64.2) of the first conduit (64).

3. Absorption structure according to one of the preceding claims, **characterized in that** the fastening wall (58') comprises an upper edge (58.1) located at the first face (52.1) of the honeycomb structure (52), a lower edge (58.2) located at the second face (52.2) of the honeycomb structure, and right- and left-hand lateral edges (58.3, 58.4) connecting the upper and lower edges (58.1, 58.2), and **in that** the flat portion (72) is centred with respect to the right- and left-hand lateral edges (58.3, 58.4).

4. Acoustic absorption structure according to one of the preceding claims, **characterized in that** the first conduit (64) comprises at least one lateral wall (74) arranged at a distance from the walls (58) delimiting the cell (60), other than the fastening wall (58').

5. Acoustic absorption structure according to the preceding claim, **characterized in that** the first conduit (64) comprises first and second planar lateral walls (74, 74') positioned on opposite sides of the flat portion (72) and a curved lateral wall (74") connecting the first and second planar lateral walls (74, 74').

6. Acoustic absorption structure according to the preceding claim, **characterized in that** the first and second planar lateral walls (74, 74') form an angle of between 40° and 140° with one another.

7. Acoustic absorption structure according to one of Claims 4 to 6, **characterized in that** each lateral wall (74) is spaced apart from the walls (58) delimiting the cell (60) other than the fastening wall (58') by a distance of between 5% and 50% of the diameter of a circle inscribed in the first cross section (S1) of the first conduit (64).

8. Acoustic absorption structure according to one of the preceding claims, **characterized in that** the honeycomb structure (52) comprises several partition tubes (62) connected to fastening walls (58') of the honeycomb structure (52) that are oriented in a single direction.

9. Acoustic absorption structure according to the preceding claim, **characterized in that**, in at least one given zone of the honeycomb structure (52), each cell (60) comprises a single partition tube (62), each fastening wall (58') supporting a single partition tube (62).

10. Acoustic absorption structure according to Claim 8, **characterized in that**, in at least one given zone of the honeycomb structure (52), each cell (60) comprises a single partition tube (62), the fastening walls (58') each supporting two partition tubes (62) positioned on opposite sides of the fastening wall (58').

11. Acoustic absorption structure according to one of the preceding claims, **characterized in that** each partition tube (62) is a part produced as a single piece.

12. Method for manufacturing an acoustic absorption structure according to one of the preceding claims, said method comprising a step of producing a honeycomb structure (52) and steps of installing an acoustically resistive layer (54) and a reflective layer (56), **characterized in that** the method comprises a step of inserting each partition tube (62) into a cell (60) and a step of fastening the partition tube (62) inserted into the cell (60) to a fastening wall (58') of the cell (60).

13. Manufacturing method according to the preceding claim, **characterized in that**, in the step of fastening each partition tube (62) in a cell, at least one centring element is used to keep the partition tube (62) spaced apart from the walls (58) delimiting the cell (60), other than the fastening wall (58').

14. Manufacturing method according to either of Claims 12 and 13, **characterized in that** the manufacturing method comprises a step of cutting at least one partition tube (62, 62') from a part (68) comprising a central segment (80) which has a cross section identical to that of the first conduit (64) of the partition tube (62, 62') and two secondary segments (82, 82') positioned on opposite sides of the central segment (80) and extending it, each of the secondary segments (82, 82') having a cross section identical to that of the second conduit (66) of the partition tube (62, 62').

15. Manufacturing method according to the preceding claim, **characterized in that** the central segment (80) has a length greater than the sum of the lengths of two first conduits (64) and **in that** each secondary segment (82, 82') has a length greater than that of a second conduit (66).

16. Manufacturing method according to one of Claims 12 to 15, **characterized in that** the steps of placing the acoustically resistive layer (54) and the reflective layer (56) are carried out after the steps of inserting and fastening each partition tube (62).

17. Manufacturing method according to one of Claims 12 to 15, **characterized in that** the steps of inserting and fastening each partition tube (62) are performed after the step of placing the acoustically resistive layer (54) and before the step of placing the reflective layer (56).

18. Manufacturing method according to one of Claims 12 to 15, **characterized in that** the steps of inserting and fastening each partition tube (62) are performed after the step of placing the reflective layer (56) and before the step of placing the acoustically resistive layer (54).
